Europäisches Patentamt

European Patent Office

Office européen des brevets

(19)

(11) Veröffentlichungsnummer: **0 379 193**

**A1**

# (12) EUROPÄISCHE PATENTANMELDUNG

(21) Anmeldenummer: **90101001.7**

(22) Anmeldetag: **18.01.90**

(51) Int. Cl.⁵: **B60R 1/06, G05B 19/23**

(30) Priorität: **19.01.89 DE 3901442**

(43) Veröffentlichungstag der Anmeldung:
**25.07.90 Patentblatt 90/30**

(84) Benannte Vertragsstaaten:
**AT BE CH DE ES FR GB IT LI NL SE**

(71) Anmelder: **HOHE KG**
**Hauptstrasse 36**
**D-6981 Collenberg(DE)**

(72) Erfinder: **Kaspar, Rudolf**
**Ringstrasse 30**
**D-6981 Collenberg(DE)**

(74) Vertreter: **Zinngrebe, Horst, Dr.rer.nat.**
**Saalbaustrasse 11**
**D-6100 Darmstadt(DE)**

(54) **Einrichtung zur elektrischen Erfassung der Position eines Spiegelglases eines Kraftfahrzeug-Rückspiegels.**

(57) Beschrieben wird eine Einrichtung zur elektrischen Erfassung der Position eines Spiegelglases eines Kraffahrzeug-Rückspiegels, welches in einem Spiegelgehäuse um wenigstens eine Achse innerhalb eines vorgegebenen Winkelbereichs verschwenkbar gelagert und mit der Abtriebswelle eines über eine Stromversorgungsleitung (34, 35) mit einer Stromquelle verbundenen Gleichstrommotors (1, 2) gekoppelt ist, mit einem Speicher zum abrufbaren Speichern einer oder mehrerer Soll-Positionen des Spiegelglases. Um eine feinfühlige, einfache und von Witterungseinflüssen freie Bereitstellung eines für die Position des Spiegelglases repräsentativen Signals zu ermöglichen, ist vorgesehen, daß von der Stromversorgungsleitung (34, 35) des Motors (1, 2) ein Wechselspannungssignal abgegriffen und über eine Signalformerstufe einem Zähler (14, 16) zugeführt wird, dessen Ausgang an einen den Speicher enthaltenden Mikroprozessor (18) angeschlossen ist.

Fig. 2

EP 0 379 193 A1

## Einrichtung zur elektrischen Erfassung der Position eines Spiegelglases eines Kraftfahrzeug-Rückspiegels

Die Erfindung betrifft eine Einrichtung zur elektrischen Erfassung der Position eines Spiegelglases eines Kraftfahrzeug-Rückspiegels, welches in einem Spiegelgehäuse um wenigstens eine Achse innerhalb eines vorgegebenen Winkelbereichs verschwenkbar gelagert und mit der Abtriebswelle eines über eine Stromversorgungsleitung mit einer Stromquelle verbundenen Gleichstrom-Motors gekoppelt ist, mit einem Speicher zum abrufbaren Speichern einer oder meherer Soll-Positionen des Spiegelglases.

Aus der deutschen Offenlegungsschrift 29 02 328 ist eine Einrichtung zur elektrischen Erfassung der Position eines Spiegelglases eines Kraftfahrzeug-Rückspiegels bekannt, bei der die Stellung des Spiegelglases relativ zum Spiegelgehäuse von Fühlern erfaßt und in Form elektrischer Signale in einem Speicher gespeichert wird. Weicht die abgespeicherte Soll-Position des Spiegelglases von der erfaßten Ist-Position ab, wird ein elektrisch gebildetes Differenzsignal zum Antrieb eines Motors benutzt, der das Spiegelglas in die Soll-Position überführt. Derartige Fühler sind relativ aufwendig und unter den Witterungseinflüssen, den sie im Spiegelgehäuse ausgesetzt sind, relativ störanfällig.

Aus der deutschen Offenlegungsschrift 32 26 435 ist ein Rückspiegel für Fahrzeuge bekannt, dessen Spiegelglas um zwei zueinander senkrechte Achsen mittels zweier Stellmotore relativ zum Spiegelgehäuse elektrisch verstellbar ist. Als Positionsfühler dienen Potentiometer, die unmittelbar hinter dem Spiegelglas in einem zweiteiligen, im wesentlichen geschlossenen Becher zusammen mit den Stellmotoren angeordnet sind. Zum Schutz gegen Verschmutzung und Witterungseinflüsse müssen die Potentiometer hermetisch versiegelt werden, was besonderen Aufwand erfordert. Außerdem sind zusätzliche Maßnahmen dafür nötig, daß bei kleinen Abweichungen der Ist-Position von der abgespeicherten Soll-Position eine definierte Einstellung des Spiegelglases gewährleistet bleibt.

Der Erfindung liegt demgegenüber die Aufgabe zugrunde, eine Einrichtung zur elektrischen Erfassung der Position eines Spiegelglases zu schaffen, die eine feinfühligere, einfachere und von Witterungseinflüssen freie Bereitstellung eines für die Position des Spiegelglases repräsentativen Signals erlaubt.

Dazu ist bei der eingangs genannten Einrichtung erfindungsgemäß vorgesehen, daß von der Stromversorgungsleitung des Motors ein Wechselspannungssignal abgegriffen und über eine Signalformerstufe einem Zähler zugeführt wird, dessen Ausgang an einen den Speicher enthaltenden Mikroprozessor angeschlossen ist. Die Erfindung nützt die Tatsache aus, daß die kurzzeitigen, durch den Kommutator des Gleichstrommotors verursachten Stromunterbrechungen in der Stromversorgungsleitung ein Wechselspannungssignal auftreten lassen, welches erfindungsgemäß zur Ermittlung der abzuspeichernden Soll-Position des Spiegelglases herangezogen wird. Die Soll-Position des Spiegelglases kann damit durch die Dauer des Wechselspannungssignals repräsentiert sein, die sich aus der Verstellung des Spiegelglases von der Soll-Position bis zu dem durch einen Anschlag definierten Ende des Winkelbereichs ergibt. Die Erfindung bringt den Vorteil, daß auf separate Fühler oder Potentiometer zur mechanischen Erfassung der Spiegelglasposition verzichtet werden kann.

Die Intensität des abgegriffenen Wechselspannungssignals wird erhöht, wenn in Weiterbildung der Erfindung in die Stromversorgungsleitung ein Wechselstromwiderstand, zweckmäßig in Form einer LC-Parallelschaltung, geschaltet ist, dessen maximaler Widerstandswert auf die Drehzahl des Motors abgestimmt ist, wobei das Wechselspannungssignal zwischen Motor und Wechselstromwiderstand abgegriffen wird.

Zur Umformung des abgegriffenen Wechselspannungssignals in vom Zähler verarbeitbare Impulse ist im Signalumformer zweckmäßig wenigstens ein Gatter vorgesehen, dessen Eingänge mit einem Spanungsteiler sowie gegebenenfalls mit einem Koppelkondensator verbunden sind, über den das Wechselspannungssignal an den Stromversorgungsleitung abgegriffen wird.

Die Kapazität des Zählers wird zweckmäßig durch die Anzahl der Umdrehungen der Abtriebswelle des Motors bestimmt, die zur Verstellung des Spiegelglases innerhalb des Winkelbereichs erforderlich ist. Schließlich erweist es sich als vorteilhaft, den Mikroprozessor über Steuersignalleitungen mit einer Treibereinrichtung zu verbinden, welche an die Stromquelle sowie an die Stromversorgungsleitung angeschlossen ist.

Die Erfindung wird nachstehend anhand des in der beigefügten Zeichnung dargestellten Ausführungsbeispiels im einzelnen beschrieben.

Es zeigen:

Fig. 1: die Ansicht eines Kraftfahrzeugs-Außenrückspiegels herkömmlicher Bauart nach Abnahme des Spiegelglases; und

Fig. 2: ein Schaltungsdiagramm einer am Rückspiegel nach Fig. 1 verwendbaren Einrichtung zur Erfassung der Spiegelglasposition.

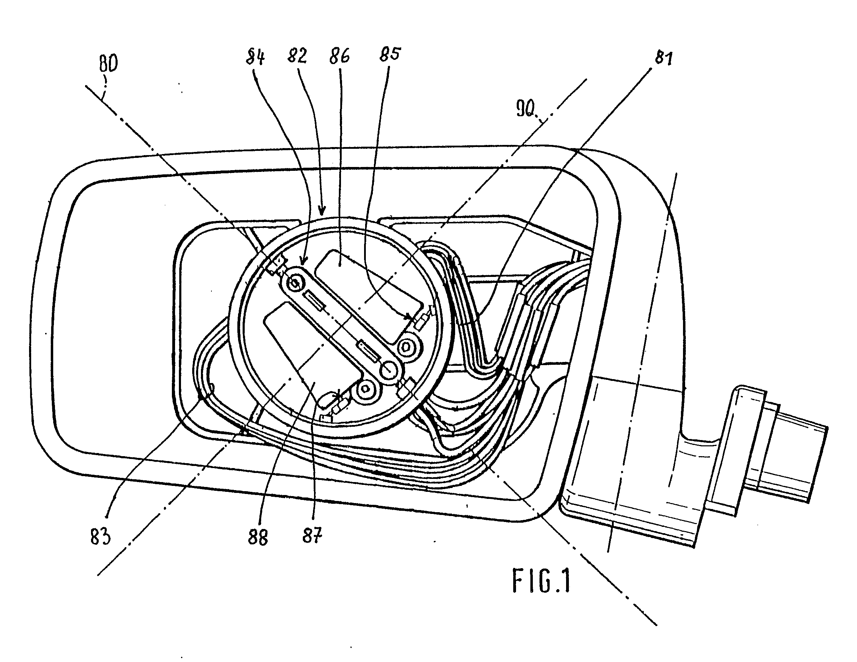

Fig. 1 zeigt einen Pkw-Außenrückspiegel, der an die linke Fahrertür montiert werden kann und der im einzelnen in der erwähnten deutschen Offenlegungsschrift 32 26 435 beschrieben ist. Unter Bezugnahme auf die dortige Beschreibung genügt es daher hier darauf hinzuweisen, daß in einem Becher 82 beiderseits einer mittigen Wippe 84 je ein Gleichstrom-Motor 86, 88 befestigt ist, auf dessen Abtriebswelle 85, 87 ein mit einer Zahnstange kämmendes Ritzel befestigt ist. Jede der beiden Zahnstangen ist an der Peripherie eines im einzelnen nicht dargestellten äußeren Teils des Bechers 82 befestigt, welcher gegenüber dem spiegelgehäusefesten inneren Teil des Bechers 82 vermöge der Wippe 84 sowie weiterer an sich bekannter Bauteile um jede der beiden aufeinander senkrecht stehenden Achsen 80, 90 verschwenkbar ist. Ist der Außenspiegel an der Fahrzeugkarosserie befestigt, liegen die Achsen 80, 90 in einer im wesentlichen vertikalen Ebene. Das nicht dargestellte Spiegelglas kann mittels einer rückseitigen Trägerplatte in an sich bekannter Weise auf den äußeren Teil des Bechers 82 aufgeklemmt werden. Die Gleichstrommotore 86, 88 können über Stromversorgungsleitungen 81, 83 aus der Fahrzeugbatterie als Stromquelle mit Strom versorgt werden.

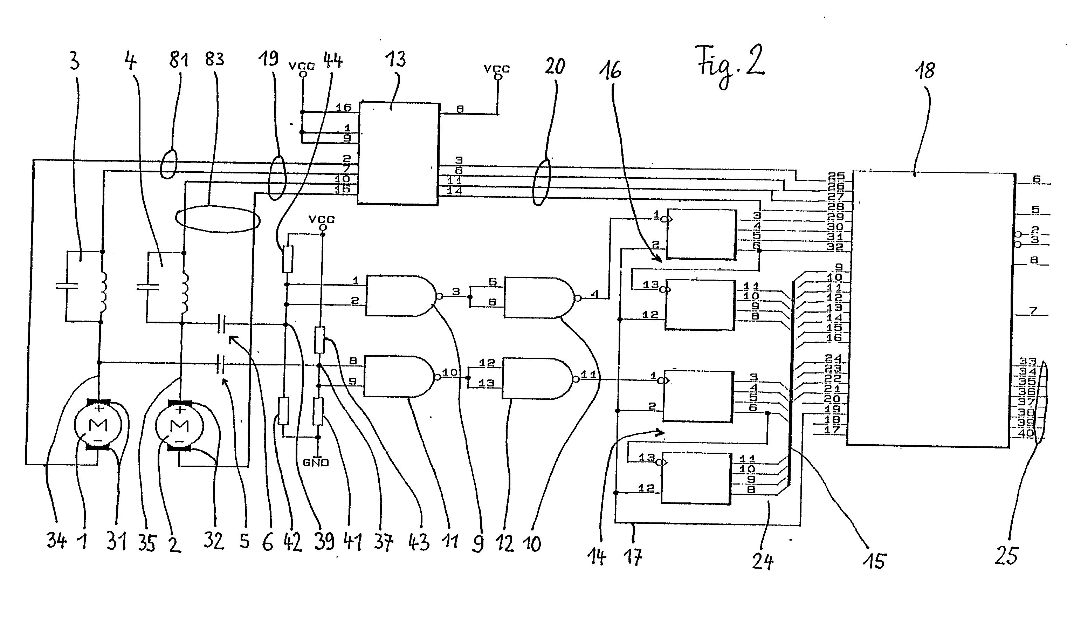

In Fig. 2 sind die Gleichstrommotore 86, 88 schematisch angegeben, wobei der Gleichstrommotor 86 mit 1 und der Gleichstrommotor 88 mit 2 bezeichnet sind. Die Stromversorgungsleitungen 81 des Gleichstrommotors 1 sind mit dem positiven bzw. negativen Anschluß des Kollektors 31 verbunden, und die Stromversorgungsleitungen 83 sind entsprechend mit dem negativen bzw. positiven Anschluß des Kollektors 32 des Motors 2 verbunden. In die mit dem positiven Anschluß des Kollektors 31 verbundene Stromversorgungsleitung 33 des Motors 1 ist eine aus einer Kapazität und einer Induktivität bestehende LC-Parallelschaltung 3 eingeschaltet. Entsprechend ist in die mit dem positivem Anschluß des Kollektors 32 verbundene Stromversorgungsleitung 35 des Motors 2 eine aus einer Kapazität und einer Induktivität bestehende LC-Parallelschaltung 4 geschaltet. Die insgessamt mit 19 bezeichneten Stromversorgungsleitungen der Motore 1, 2 sind an eine Treibereinrichtung 13 in Form eines Chips angeschlossen, die außerdem mit den Polen der nicht dargestellten Fahrzeugbatterie als Gleichspannungsquelle sowie mit Steuerleitungen 20 verbunden ist. Die Treibereinrichtung 13 enthält Steuerorgane, welche in Abhängigkeit von den über Steuerleitungen 20 aufgenommenen Steuersignalen die Stromversorgungsleitungen 19 zum Antrieb der Motore 1 und/oder 2 mit der Batterie verbinden.

Die den positiven Anschluß des Kollektors 31 mit der LC-Parallelschaltung 3 verbindende Leitung 34 ist über einen Koppelkondensator 5 mit dem Verknüpfungspunkt 37 zweier in Reihe geschalteter Widerstände 41, 43 verbunden, die als Spannungsteiler zwischen die Batteriespannung VCC und Masse GND geschaltet sind. An dem Verknüpfungspunkt 37 liegen die beiden Eingänge eines NAND-Gatters 11, dessen invertierter Ausgang mit den beiden Eingängen eines weiteren NAND-Gatters 12 verbunden ist. Der invertierte Ausgang des weiteren NAND-Gatters 12 führt zu dem Eingang eines im Ganzen mit 14 bezeichneten, zweistufigen Zählers. Die acht Ausgangsleitungen 24 des Zählers 14 gelangen über einen Datenbus 15 zu entsprechenden Eingängen eines Mikroprozessors 18. Der Mikroprozessor 18 erzeugt unter anderem auf einer mit den Löscheingängen der Zählerstufen 14 verbundenen Leitung 17 bei Bedarf ein den Zähler 14 zurücksetzendes Signal. Der positive Anschluß des Kollektors 31 des Motors 1 ist also über den Koppelkondensator 5 mit einer als Signalformer wirkenden Reihenschaltung aus zwei NAND-Gattern 11, 12 sowie daran anschließend mit einem Zähler verbunden, dessen Ausgangssignale von der Mikroprozessoreinheit 18 in noch zu beschreibender Weise weiterverarbeitet wird.

Entsprechend ist die den positiven Anschluß des Kollektors 32 mit der LC-Parallelschaltung 4 verbindende Leitung 35 des Gleichstrommotors 2 über einen Koppelkondensator 6 an den Verknüpfungspunkt 39 eines aus den Widerständen 42 und 44 bestehenden Spannungsteilers angeschlossen, welcher zwischen der Batteriespannung und - Masse liegt. Der Verknüpfungspunkt 39 ist mit den beiden Eingängen eines NAND-Gatters 9 verbunden, dessen invertierter Ausgang mit den beiden Eingängen eines weiteren NAND-Gatters 10 verbunden ist. Der invertierte Ausgang des weiteren NAND-Gatters 10 führt zu einem Eingang eines weiteren, im Ganzen mit 16 bezeichneten zweistufigen Zahlers, ·dessen Ausgangsleitungen teilweise über den Datenbus 15 und teilweise direkt dem Mikroprozessor 18 zugeführt sind. Der Mikroprozessor 18 besitzt eine erste Gruppe von Ausgangsleitungen 25, die zu nicht dargestellten Betätigungsorganen führen, sowie eine zweite Gruppe von Ausgangsleitungen, die die erwähnten Steuerleitungen 20 bilden. Ferner enthält der Mikroprozessor 18 einen nicht dargestellten Speicher zum abrufbaren Bereithalten von Zählständen aus den Zählern 14, 16.

Jeder der beiden Gleichstrommotore 1, 2 enthält mehrere auf seinem Anker winkelmäßig versetzte Wicklungen, denen nacheinander über den Kommutator 31, 32 zum Antrieb des Gleichstrommotors Strom zugeführt werden kann. Der Stromfluß auf den Stromversorgungsleitungen 81, 83 erleidet daher während einer Umdrehung des Ankers des zugehörigen Gleichstrommotors 1, 2 mehrere Unterbrechungen, die als Wechselstromsignal mit einer durch die Drehzahl des Ankers bestimmten Frequenz in Erscheinung treten. Wenn die Resonanzfrequenz der LC-Parallelschaltung 3, 4 auf diese Frequenz abgestimmt ist, läßt sich über die Koppelkondensatoren 5, 6 je ein Wechselspannungssignal ausreichender Intensität von den Leitungen 34, 35 abgreifen. Das an den Verknügpfungspunkten 37, 39 daher auftretende Wechselspannungssignal schaltet die NAND-Gatter 9, 11, da deren gleichstrommäßiges Eingangspotential aufgrund der Spannungsteiler 41, 43 bzw. 42, 44 geeignet gewählt ist. Demzufolge tritt an den invertierten Ausgängen der NAND-Gatter 9, 11 jeweils dann ein Impuls auf, wenn der zugehörige Kommutator 31, 32 einen isolierenden Abschnitt zwischen zwei benachbarten Ankerwicklungen überstreicht. Die nachgeschalteten NAND-Gatter 10, 12 dienen dazu, die Flanken dieser Impulse in einer Weise aufzuteilen, daß die auf ihren invertierten Ausgängen auftretenden Impulse den jeweils nachgeschalteten Zähler 14, 16 um je einen Zählschritt weiter schalten können.

Das Abspeichern einer bestimmten Position des Spiegelglases relativ zum Spiegelgehäuse geschieht in folgende Weise: Es sei angenommen, daß sich das Spiegelglas in einer Position befindet, die im Speicher der Mikroprozessoreinheit 18 abgespeichert werden soll. Dies kann der Mikroprozessoreinheit 18 beispielsweise durch Betätigen eines Schalters mitgeteilt werden, der mit einer der Ausgangsleitungen 25 verbunden ist. Die Mikroprozessoreinheit 18 gibt daraufhin über die Steuersignalleitungen 20 ein Steuersignal an die Treibereinrichtung 13, welche die von der Fahrzeugbatterie kommenden Leitungen daraufhin mit dem Stomversorgungsleitungen 19 verbindet. Demzufolge beginnen normalerweise beide Motore 1, 2 zu laufen, und zwar solange bis das Spiegelglas einen Anschlag in Richtung der Achse 90 sowie einen Anschlag in der Achsenrichtung 80 erreicht. Diese nicht dargestellten Anschläge begrenzen den vorgegebenen Winkelbereich, innerhalb dessen das Spiegelglas verstellt werden kann. Während der zugehörigen Drehbewegungen der Anker der beiden Motore 1, 2 werden an den Verknüpfungspunkten 37, 39 Wechselspannungssignale auftreten, die in der erläuterten Weise von den Zählern 14, 16 gezählt werden. Wenn das Spiegelglas gegen die Anschläge angelaufen ist, kommen die Gleichstrommotore 1, 2 zum Stillstand, was von der Mikroprozessoreinheit 18 festgestellt wird. Diese übernimmt daraufhin die Zählerstände der Zahler 14, 16 in ihren Speicher.

Befindet sich das Spiegelglas in einer beliebigen Position innerhalb des vorgegebenen Winkelbereichs, und soll das Spiegelglas in die gespeicherte Position gefahren werden, wird dies durch Betätigen eines geeigneten Schalters der Mikroprozessoreinheit 18 über einen oder mehrere der Ausgangsleitungen 25 mitgeteilt. Die Mikroprozessoreinheit 18 läßt daher durch Erzeugung entsprechender Steuersignale auf den Steuersignalleitungen 20 das Spiegelglas zunächst gegen die Anschläge in Richtung der Achsen 80, 90 fahren. Sodann wird die Antriebsrichtung der Motore 1, 2 umgestellt und das Spiegelglas von diesen Anschlägen aus in eine Position gefahren, die dem in der Mikroprozessoreinheit 18 abgespeicherten Zählerständen entspricht. Dazu erfaßt die Mikroprozessoreinheit 18 kontinuierlich die steigende Anzahl der Wechselspannungsimpulse, die von den GLeichstrommotoren 1, 2 vom Losfahren des Spiegelglases von den erwähnten Anschlägen ausgehend erzeugt werden, und vergleicht diese mit den gespeicherten Zählständen für die Motore 1, 2. Sobald die Mikroprozessoreinheit 18 Gleichheit zwischen dem vom Motor 1 erzeugten Zählstand mit dem für diesen gespeicherten Zählstand feststellt, ändert die Mikroprozessoreinheit 18 das dem Motor 1 betreffende Steuersignal auf den Steuersignalleitungen 20 mit der Folge, daß Motor 1 stillgesetzt wird. Entsprechend wird der Zählstand des Motors 2 kontinuierlich mit dem für diesen gespeicherten Zählstand verglichen und der Motor 2 stillgesetzt, sobald die Mikroprozessoreinheit 18 Gleichheit feststellt. Sind beide Gleichstrommotore 1, 2 stillgesetzt, befindet sich der Spiegelglas in der Soll-Stellung.

Es versteht sich, daß die in Fig. 2 dargestellte Einrichtung an geschützter Stelle im Inneren des Fahrzeugs untergebracht werden kann, da das Wechselspannungssignal an beliebiger Stelle der Leitungen 34, 35 abgegriffen werden kann. Der Erfindung ist auch nicht auf die Verwendung zweier Gleichstrommotore 1, 2 bzw. 86, 88 zur 'Verstellung des Spiegelglases beschränkt, sondern ist auch in einem System einsetzbar, in welchem das Spiegelglas nur mittels eines Gleichstrommotores in der erforderlichen Weise verstellt werden kann.

**Ansprüche**

1. Einrichtung zur elektrischen Erfassung der Position eines Spiegelglases eines Kraftfahrzeug-Rückspiegels, welches in einem Spiegelgehäuse um wenigstens eine Achse innerhalb eines vorgegebenen Winkelbereichs verschwenkbar gelagert und mit der Abtriebswelle wenigstens eines über eine Stromversorgungsleitung mit einer Stromquelle verbundenen Gleichstrom-Motors gekoppelt ist, mit einem Speicher zum abrufbaren Speichern einer oder mehrerer Soll-Positionen des Spiegelglases, dadurch gekennzeichnet, daß von der Stromversorgungsleitung (19) des Motors (1, 2) ein Wechselspannungssignal abgegriffen und über eine Signalformerstufe (9, 10; 11, 12) einem Zähler (16, 17; 14, 15) zugeführt wird, dessen Ausgang (23, 24) an einen den Speicher enthaltenden Mikroprozessor (18) angeschlossen ist.

2. Einrichtung nach Anspruch 1, dadurch gekennzeichnet, daß in die Stromversorgungsleitung ein Wechselstromwiderstand (3, 4) geschaltet ist, dessen maximaler Widerstandswert die Drehzahl des Motors (1, 2) abgestimmt ist, wobei das Wechselspannungssignal zwischen Motor (1, 2) und Wechselstromwiderstand (3, 4) abgegriffen wird.

3. Einrichtung nach Anspruch 2, dadurch gekennzeichnet, daß der Wechselstromwiderstand eine LC-Parallelschaltung ist.

4. Einrichtung nach einem der vorstehenden Ansprüche, dadurch gekennzeichnet, daß das Wechselspannungssignal über einen Koppelkondensator (5, 6) abgegriffen wird.

5. Einrichtung nach einem der vorstehenden Ansprüche, dadurch gekennzeichnet, daß die Signalformerstufe wenigstens ein Gatter (11, 12) aufweist, dessen Eingange mit einem Spannungsteiler sowie gegebenenfalls mit dem Koppelkondensator verbunden sind.

6. Einrichtung nach einem der vorstehenden Ansprüche, dadurch gekennzeichnet, daß die Kapazität des Zählers (16, 17; 14, 15) durch die Anzahl der Umdrehungen der Abtriebswelle des Motors (1, 2) bestimmt ist, die zur Verstellung des Spiegelglases innerhalb des Winkelbereichs erforderlich ist.

7. Einrichtung nach einem der vorstehenden Ansprüche, dadurch gekennzeichnet, daß der Mikroprozessor (18) über Steuersignalleitungen (20) mit einer Treibereinrichtung (13) verbunden ist, welche an die Stromquelle sowie an die Stromversorgungsleitung (19) angeschlossen ist.

FIG.1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2585200 (JAEGER)<br>* das ganze Dokument * | 1, 4, 7 | B60R1/06<br>G05B19/23 |
| Y | DE-A-3311229 (VDO ADOLF SCHINDLING AG)<br>* Seite 12, Zeile 5 - Seite 13, Zeile 12; Figur 1 *<br>* Seite 14, Zeile 25 - Seite 16, Zeile 32 * | 1, 6, 7 | |
| Y | DE-A-3527906 (KEIPER RECARO GMBH)<br>* das ganze Dokument * | 1, 6, 7 | |
| A | ELEKTRONIK.<br>vol. 33, no. 25, Dezember 1984, MUNCHEN DE<br>Seiten 71 - 72; Manfred BIRK:<br>"Unkonventionnelle Drehzahlmessung und -regelung bei Gleichstrommotoren"<br>* das ganze Dokument * | 2, 4 | |
| A | PATENT ABSTRACTS OF JAPAN<br>vol. 8, no. 80 (M-289)(1517) 12 April 1984,<br>& JP-A-58 224828 (NISSAN JIDOSHA K.K.) 27 Dezember 1983,<br>* das ganze Dokument * | 1 | RECHERCHIERTE SACHGEBIETE (Int. Cl.5)<br><br>B60R<br>G05B |

Der vorliegende Recherchenbericht wurde für alle Patentansprüche erstellt

| Recherchenort | Abschlußdatum der Recherche | Prüfer |
|---|---|---|
| DEN HAAG | 11 MAI 1990 | DUBOIS B.F.J. |